# EUROPEAN PATENT SPECIFICATION

(11) **EP 3 899 778 B1**
(45) Date of publication and mention of the grant of the patent: **23.07.2025**
(21) Application number: 19702183.5
(22) Date of filing: 10.01.2019
(51) Int. Cl.: G06V 20/58, G06F 18/25

(54) **A METHOD FOR MULTI-MODAL SENSOR FUSION USING OBJECT TRAJECTORIES FOR CROSS-DOMAIN CORRESPONDENCE**
VERFAHREN ZUR MULTIMODALEN SENSORFUSION UNTER VERWENDUNG VON OBJEKTTRAJEKTORIEN FÜR BEREICHSÜBERGREIFENDE ÜBEREINSTIMMUNG
PROCÉDÉ DE FUSION DE CAPTEURS MULTIMODAUX À L'AIDE DE TRAJECTOIRES D'OBJET POUR CORRESPONDANCE INTER-DOMAINES

(43) Date of publication of application: 27.10.2021
(73) Proprietor: Shenzhen Yinwang Intelligent Technologies Co., Ltd., Shenzhen, Guangdong 518129 (CN)
(72) Inventor: LUBARSKY, Yackov, 80992 Munich (DE); KISILEV, Pavel, 80992 Munich (DE); PENG, Xueming, 80992 Munich (DE); SHE, Xiaoli, 80992 Munich (DE); XU, Chunjing, 80992 Munich (DE); BENNATAN, Amir, 80992 Munich (DE)
(74) Representative: Pfenning, Meinig & Partner mbB
(86) International application number: PCT/EP2019/050505
(87) International publication number: WO 2020/143916

(56) References cited:
- CN-A- 108 280 442
- DU YONG KIM ET AL: "Data fusion of radar and image measurements for multi-object tracking via Kalman filtering", INFORMATION SCIENCES, vol. 278, 26 March 2014 (2014-03-26), NL, pages 641 - 652, XP055607343, ISSN: 0020-0255, DOI: 10.1016/j.ins.2014.03.080

## Description

### BACKGROUND

The present invention, in some embodiments thereof, relates to multi-modal sensor fusion of moving object data, but not exclusively, to a multi-modal sensor fusion system for moving objects data generated by vehicle sensors.

Automotive applications typically require a clear perception of an area surrounding a vehicle. Perception includes, for example, identification of moving objects such as othervehicles and pedestrians, as well as static objects such as road signs and debris. In order to generate a suitable perception, vehicles are equipped with sensors, like cameras, radio detection and ranging (RADAR) and/or light detection and ranging (LIDAR) sensors. Advanced warning systems use information generated by the sensors to warn of potential dangers, and autonomous vehicle control systems use it to safely maneuver the vehicle. The advanced warning systems need to operate in real time, and minimize mistakes in identification and classification of moving objects, while integrating data received by the different sensors.

CN 108 280 442 A discloses a multi-source target fusion method using a unified time coordinate system and a geographical coordinate system to, respectively, perform a time registration and a spatial registration. A method for generating the multi-sensor target matching result includes: initializing the weight matrix by using the Hungarian algorithm by initializing the target state information obtained by time registration and spatial registration of each sensor target information. The Euclidean distance between the targets of different sensors is used as the weight in the matrix, and then the target matching between multiple sensors is performed by finding a "perfect" match.
Dempster-Schafer evidence theory is also applied for target existence fusion and category fusion.

Du Yong Kim ET AL: "Data fusion of radar and image measurements for multi-object tracking via Kalman filtering", Information Sciences, vol. 278, September 2014, pages 641-652, ISSN: 0020-0255, DOI: 10.1016/j.ins.2014.03.080, discloses using a common (observation) plane for which, for each of the CCD camera and the radar, an homography is learnt. Multi-object tracking is performed by employing Kalman filtering and data fusion technique underlying a Gaussian mixture form.

### SUMMARY

The present invention is as defined in the appended set of claims. It is an object of some embodiments of the present invention to provide a system and a method for multi-modal sensor fusion of moving object data.

The foregoing and other objects are achieved by the features of the independent claims. Further implementation forms are apparent from the dependent claims, the description and the figures.

Other systems, methods, features, and advantages of the present disclosure will become apparent to one with skill in the art upon examination of the following drawings and detailed description.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is an exemplary layout of the various components of a system for multi-modal sensor fusion of moving object data, according to some embodiments of the present invention;
FIG. 2 is an exemplary dataflow of a process for multi-modal sensor fusion of moving object data, according to some embodiments of the present invention;
FIG. 3 is an exemplary dataflow of a process of mapping spatiotemporal trajectories onto a domain corresponding to a camera domain, according to some embodiments of the present invention;
FIG. 4 is an exemplary dataflow of a process of mapping spatiotemporal trajectories onto a domain corresponding to a RADAR/LIDAR domain, according to some embodiments of the present invention;
FIG. 5 is an exemplary dataflow of a process of matching spatiotemporal trajectories using a latent state model, according to some embodiments of the present invention;
FIG. 6 is a table of values for attributes of latent states and update functions for using a Kalman filter in evaluating probabilities of latent states, according to some embodiments of the present invention;
FIG. 7 is an exemplary depiction of camera and RADAR/LIDAR trajectories, each in a respective domain of an identical scene, according to some embodiments of the present invention; and
FIG. 8 is an exemplary depiction of an application of an embodiment of the present invention.

### DETAILED DESCRIPTION

The present invention, in some embodiments thereof, relates to relates to multi-modal sensor fusion of moving object data, and, more specifically, but not exclusively, to a multi-modal sensor fusion system for moving objects data generated by vehicle sensors.

According to some embodiments of the present invention, there are provided multi-modal sensor fusion systems and methods in which datasets generated from different sensors are integrated for a purpose of presenting data to users in a combined manner. For example, the systems and methods may fuse spatiotemporal streaming data from sensors such as cameras, RADAR(s), or LIDAR(s).

Multi-modal sensor fusion systems present many computational challenges such as: overcoming different coordinate systems attributed to different sensors, incompatible numbers of detections (such as false positives and false negatives), alignment across time between modalities (e.g., different sensing frequencies for different sensors), and noise. Overcoming such computational challenges is important since multi-modal sensor fusion systems are often used in time critical and sensitive situations such as early warning systems aimed at preventing vehicle accidents.

Existing solutions for multi-modal sensor fusion exhibit several drawbacks, for example, in Wang, Xiao, et al. "On-road vehicle detection and tracking using MMW radar and monovision fusion." IEEE Transactions on Intelligent Transportation Systems 17.7 (2016): 2075-2084, a system is described which fuses radar and image modalities by using trajectories, however, the fusion is performed on a frame-by-frame level, and trajectories are used only as an extra layer of verification.

In Lynen, Simon, et al. "A robust and modular multi-sensor fusion approach applied to MAV navigation." Intelligent Robots and Systems (IROS), 2013 IEEE/RSJ International Conference on. IEEE, 2013, a system is described which tracks multiple modalities across time to obtain better estimates of obstacles, relative to use of a single modality, however a solution for matching observations between modalities is not provided.

By contrast, the multi-modal sensor fusion system described herein matches between different modalities by matching between spatiotemporal trajectories, as spatiotemporal trajectories are separately computed for each modality and then inputted into a matching computation that matches between complete trajectories. Matching between trajectories of camera and radar detections may improve robustness, because each trajectory contains more information regarding a moving object than a single camera frame.

Another possible advantage is in assisting offline training and evaluation, by using the system described herein offline in order to generate high-quality estimates of matching between modalities.

Following is a brief description of dataflow of processing of spatiotemporal data, according to some embodiments of the present invention. For brevity, 'spatiotemporal trajectories' may be referred to herein as 'trajectories', 'RADAR or LIDAR' may be referred to herein as 'RADAR/LIDAR', and "variable" and 'attribute' is used herein interchangeably.

Each of the described systems includes and each of the described methods is implemented using a processing circuitry configured to execute a code. The processing circuitry may comprise hardware and firmware and/or software. For example, the processing circuitry may comprise one or more processors and a non-transitory medium connected to the one or more processors and carrying the code. The code, when executed by the one or more processors, causes the system to carry out the operations described herein.

The spatiotemporal data originating from a camera and/or RADAR/LIDAR is buffered, for example, by counting a predetermined number of camera frames, and buffering data from a RADAR/LIDAR corresponding to a time interval according to the predetermined number of camera frames. Next, code for producing spatiotemporal trajectories for each moving object detected by each sensor is executed.

Next, for each pair of spatiotemporal trajectories, a "distance" metric is computed which quantifies their similarity. The trajectories are processed by the code in order to be mapped into a predetermined domain. The predetermined domain comprises a coordinate system according to data originating from the camera sensor, or alternatively, a coordinate system according to data originating from the RADAR/LIDAR sensor, or alternatively, a latent temporal domain comprising a set of locational, directional, and velocity attributes for each moving object.

Processing the spatiotemporal trajectories may include estimation of velocities, and/or estimation of dimensions and/or heights of respective moving objects. For example, a camera typically produces two dimensional data without depth, in a line of view corresponding to camera lens location and orientation, while a RADAR/LIDAR typically produces two dimensional data with depth but without height according to the RADAR/LIDAR orientation and mounted location on a vehicle. In addition, calibration matrices, which provide the relative locations of the camera and radar relative to the ego-vehicle center (center of the vehicle on which they are mounted), and the camera projection attributes (intrinsic and extrinsic), are used in order to align data from originating from the different sensors.

Next, following estimation of velocities and heights for respective trajectories of respective moving objects, and alignment of coordinates, a trajectory matching computation is executed on mapped trajectories, in order to identify each moving object with two respective trajectories. Optionally, the matching computation uses Euclidean distance metric, and matches between trajectories using this metric, by minimizing a sum of distances between pairs across all possible trajectory matching combinations, which may be performed by applying an optimization algorithm.

According some embodiments of the present invention in which a latent temporal domain is used as the predetermined domain for mapping trajectories, a latent state is estimated for each pair of camera and RADAR/LIDAR trajectories which are used as two types of observations of the latent model, and postulate a statistical model that relates them to latent states variables. The statistical model is employed by the matching computation by matching trajectories whose joint latent state has a high probability of originating from a single moving object.

Following the matching computation, an outcome of the matching is outputted to respective components, such as vehicle controller(s), and/or output display(s).

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

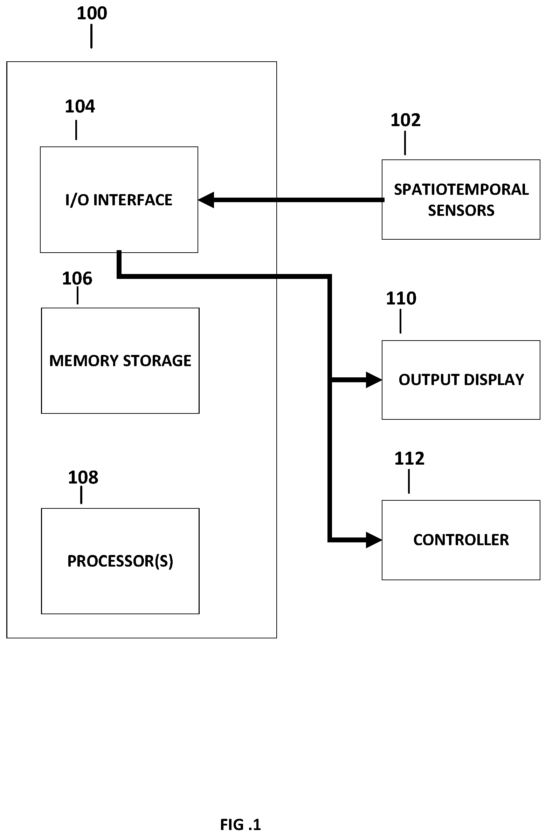

Reference is now made to FIG. 1, which is a depiction of system components in a multi-modal sensor fusion system 100, and related vehicular components, according to some embodiments of the present invention. The system 100 is used for multi-modal sensor fusion, wherein spatiotemporal sensors 102 consist of a camera and a RADAR/LIDAR, according to some embodiments of the present invention. For example, the system 100 may be integrated in a vehicle as part of an early warning mechanism, accessed by a driver via a head up display (HUD), in order to present the driver with a stream of fused sensor information, such as velocity, direction, and highlighted indicators of moving objects, which may assist the driver to achieve a reduced reaction time in case of danger of collision with debris, pedestrians, and other vehicles. Alternatively, the system 100 may present a vehicle controller responsible for autonomous driving of the vehicle, with fused data regarding moving objects in front of the vehicle, so that the vehicle controller may decide upon an action regarding vehicle navigation based on the moving object fused data.

An I/O interface 104 receives raw spatiotemporal data from the spatiotemporal sensors 102, which is then processed by a code stored in the memory storage 106, by execution of the code by the one or more processor(s) 108. The code contains instructions for a process for multi-modal sensor fusion of moving object data, by generating spatiotemporal trajectories from the raw spatiotemporal data, according to a predetermined data sampling criteria, and by matching the generated spatiotemporal trajectories across different modalities, for example, by matching camera trajectories to RADAR/LIDAR trajectories.

Outcomes of the matching of spatiotemporal trajectories are outputted via the I/O interface 104 by the one or more processor(s) executing the code instructions, whereas the outputs may be directed to the output display 110 and/or the controller 112. For example, if a vehicle using the system is controlled by a driver then the outputs may be directed to the output display 110, whereas if the vehicle is controlled autonomously by the controller 112, then it may use the outputs for obstacle avoidance, and route planning.

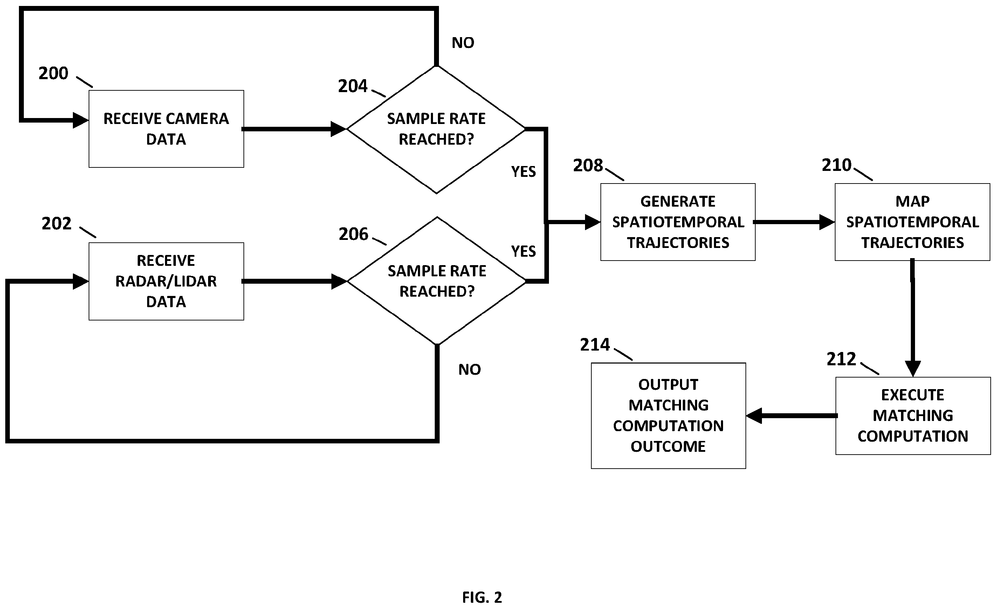

Reference is now made to FIG. 2, which is an exemplary dataflow of a process for multi-modal sensor fusion of moving object data, according to some embodiments of the present invention. First, as shown at 200 and 202, raw camera and RADAR/LIDAR data is received, for example, camera frame data is received at a certain rate as a data stream, and/or RADAR/LIDAR detections are received at a certain frequency.

Next, as shown in 204 and 206, the received raw data is checked against a predefined sample rate, which may differ for camera and/or RADAR/LIDAR sensors. The predefined sample rate may be, for example, a predefined number of seconds, a predefined number of camera frames, and/or a predefined number of RADAR/LIDAR detections. If the sample rate is reached, then, as shown in 208, spatiotemporal trajectories are generated for each raw data stream. The spatiotemporal trajectories are generated by an extended object tracking process across time. According to some embodiments of the present invention, a Kalman tracking process is used in order to track and generate the spatiotemporal trajectories.

Next, as shown in 210, the generated spatiotemporal trajectories are mapped onto the predetermined domain. Denote by *X, Y, Z* horizontal, vertical, and depth axis respectively, then the RADAR/LIDAR domain describes moving objects in a *XZ* plane and includes a velocity for each moving object, whereas the camera domain describes moving objects in a *XY* plane. In addition, calibration matrices may be used in order to align the trajectories originating from the different sensors according to the sensors relative position to an ego-vehicle center.

The predetermined domain comprises a domain corresponding to the camera domain, or the RADAR/LIDAR domain, or alternatively, comprises a latent temporal domain, whereas each choice of predetermined domain may convey certain advantages/disadvantages over alternative choices for different embodiments of the present invention. For example, mapping spatiotemporal trajectories onto a latent temporal domain may increase trajectory matching accuracy but may also increase computational complexity.

Next, as shown in 212, following the mapping of the spatiotemporal trajectories onto the predetermined domain, a matching computation is executed between the mapped spatiotemporal trajectories, in order to match between trajectories corresponding to identical moving objects. The matching computation is executed by using a predefined distance metric, for example, using Euclidean distance, and by applying an optimization algorithm to minimize a sum of distances, for example, the Kuhn-Munkres ("Hungarian") algorithm may be used to select a matching (i.e., a subset of all pairs, in which each trajectory appears at most once) that minimizes the sum of distances.

Next, as shown in 214, an outcome of the matching computation is outputted. Matched trajectories may be outputted via the I/O interface 104 to the output display 110, and/or to the controller 112.

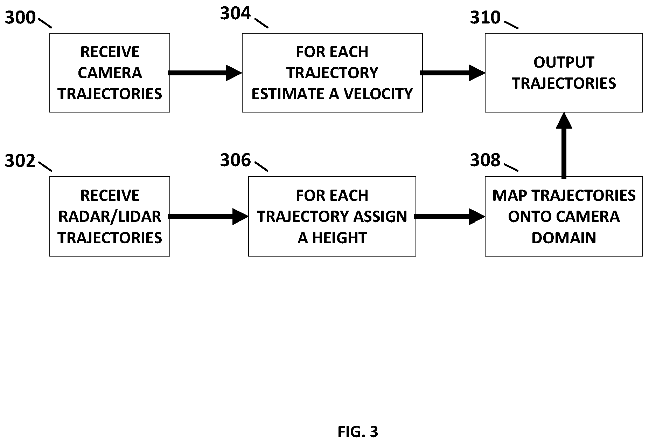

Reference is also made to FIG. 3, which is an exemplary dataflow of a process of mapping spatiotemporal trajectories, as depicted in 208, onto a domain corresponding to a camera domain, according to some embodiments of the present invention. Following generating spatiotemporal trajectories, as shown in 206, camera and RADAR/LIDAR trajectories are received separately, as shown in 300 and 302. Next, as shown in 304, for each camera trajectory, given in *XY* coordinates, a velocity is estimated. Optionally, the velocity is estimated by an average optical flow inside the object boundary. Optical flow is a pattern of apparent motion of image objects between two consecutive frames, caused by a movement of object or camera. Calculating optical flow may be achieved in a number of ways ranging from computer vision algorithms (e.g. the Lucas-Kanade method) to deep neural networks (for example, using FlowNet 2.0). An optical flow algorithm output typically comprises motion vectors in a camera domain of image pixels. Averaging optical flow inside a boundary of an object provides an estimate of object motion projected to the camera plane. A series of velocity estimations computed over a camera trajectory can be combined in a weighted sum together with a bounding box-based velocity calculation for a more robust estimation. The precise value of the weight in the weighted sum may be learnt from a sample training data set using machine learning techniques.

As shown in 306, a height is estimated for each moving object corresponding to a RADAR/LIDAR trajectory given in XZ coordinates. Optionally, each RADAR/LIDAR trajectory is assigned a predefined identical height, for example, a height of one meter. Next, as shown in 308, the RADAR/LIDAR trajectories, together with their assigned heights are mapped onto the camera domain, optionally using the calibration matrices for coordinate's alignment. Finally, as shown in 310, the mapped spatiotemporal trajectories are outputted for further processing by the mapping computation 210.

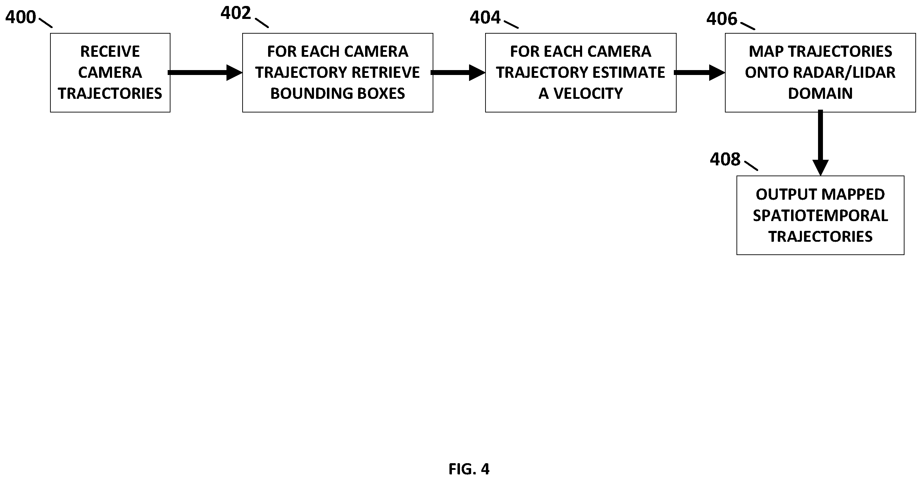

Reference is also made to FIG. 4, which is an exemplary dataflow of a process of mapping spatiotemporal trajectories onto a domain corresponding to a RADAR/LIDAR domain, as depicted in 208, according to some embodiments of the present invention. First, as shown in 400, camera trajectories are received by the process. Next, as shown in 402, for each camera trajectory a time series of two dimensional spatial bounding boxes is retrieved, wherein each bounding box corresponds to a respective moving object in a respective camera frame. According to some embodiments of the present invention, the bounding boxes are retrieved by applying a predefined camera object detection algorithm. Next, as shown in 404, for each camera trajectory a respective moving object velocity is estimated. The velocities may be estimated in a similar manner as explained for 304, or optionally, comprise of a bounding box based calculation. Next, as shown in 406, the camera trajectories are mapped onto the RADAR/LIDAR domain using coordinate calibration matrices. Finally, as shown in 408, the mapped camera and RADAR/LIDAR trajectories are outputted for further processing by the mapping computation 210.

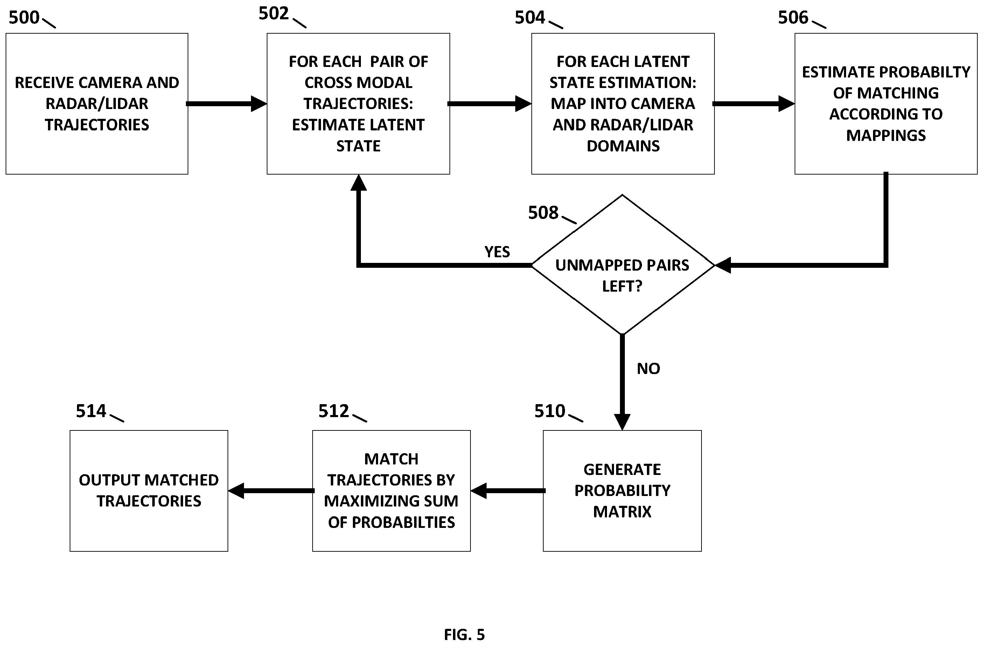

Next, reference is also made to FIG. 5, which is an exemplary dataflow of a process of matching spatiotemporal trajectories using a latent state model, as related to 208 and 210, according to some embodiments of the present invention. First, as shown in 500, spatiotemporal trajectories are received by the process following generating trajectories in 206. Next, as shown in 502, a latent state is estimated for each possible combination of pairs of camera and RADAR/LIDAR trajectories. Each spatiotemporal trajectory may be assigned a numerical index for referral, and pairing of trajectories may be performed according to an ascending index order.

Optionally, the latent state is estimated employing a nonlinear double model Kalman filter with smoothing, and using as observations, for each respective trajectory in a respective pairing of trajectories used in a latent state, estimations of respective bounding boxes and respective RADAR/LIDAR detections.

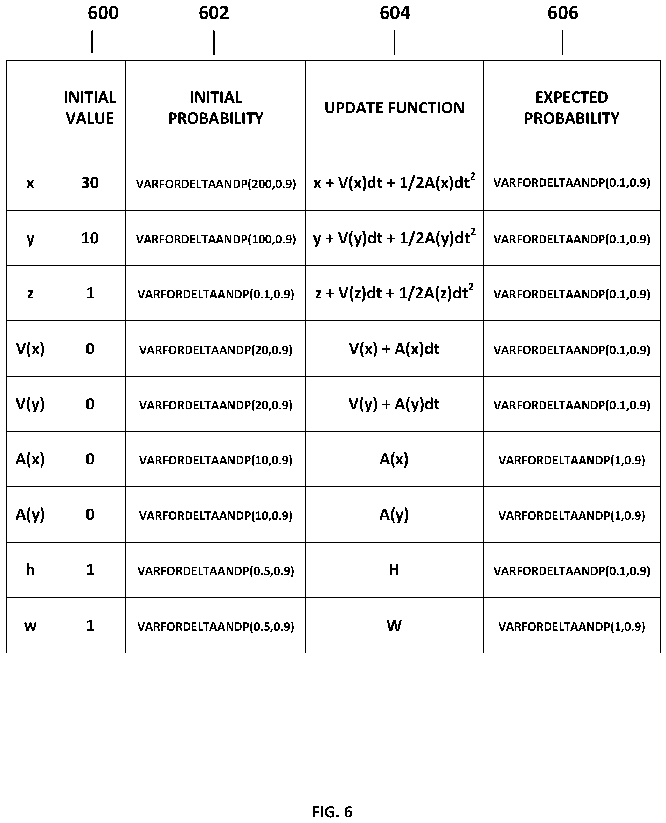

Each latent state contains attributes (*x, y, z, V(x), V(y), A(x), A(y), h, w*) comprising respectively: Distance from ego-vehicle in the axis of ego-vehicle motion, location on axis orthogonal to motion, a velocity *X* component, a velocity *Y* component, an acceleration *X* component, an acceleration *Y* component, an object height in a plane facing the ego-vehicle, and an object width in a plane facing the ego-vehicle. Exemplary details of attribute values and update functions as employed by the Kalman filter, are depicted in FIG. 6.

Next, as shown in 504, for each estimated latent state, a mapping is performed into the camera and RADAR/LIDAR domains. The purpose of the mappings is to estimate a conditioned probability, as shown in 506, for each mapping, which represents an event that a respective latent state corresponds to a moving object detected by the spatiotemporal sensors, given the respective mapping. For example, a camera observation is preprocessed as a bounding box characterized by top left and bottom right values in the camera domain. Given a latent state, obtaining a camera observation with top left and bottom right values is computed by projecting values derived from the latent state onto the camera domain. Next, a difference from the observed camera attributes is evaluated, and a product of a Gaussian density function with predetermined variances (as detailed in FIG. 6) is computed.

Next, the two conditional probabilities corresponding to a respective latent state are summed, and the resulting sum is designated to be a distance between the respective pair of camera and RADAR/LIDAR trajectories.

Next, as shown in 508, a check is performed whether there are any unmapped pairs of camera and RADAR/LIDAR trajectories, and if so selecting pairs of trajectories continues at 502.

Upon completion of pairing trajectories and computing for each pair a conditional probability, as shown in 510 a probability matrix *P*_{*i*,*j*} is generated, wherein *P*(*i, j*) is equal to the conditional probability estimated in 506 that a respective camera trajectory with an assigned index i and a respective RADAR/LIDAR trajectory with an assigned index *j* originate from observations of an identical object.

Next, as shown in 512, camera and RADAR/LIDAR trajectories are matched by maximizing a sum of probabilities in *P*(*i, j*) such that at most one entry is selected from each row and each column of *P*(*i, j*)*.* According to some embodiments of the present invention, the matching is performed by using the Kuhn-Munkres ("Hungarian") algorithm. Next, as shown in 514, the matched trajectories are outputted to 212.

Reference is now made to FIG. 6, which is a table of values for attributes of latent states and update functions for using a Kalman filter in evaluating probabilities of latent states, according to some embodiments of the present invention.

As shown in 600, each latent state attributes are each assigned an initial value, which may be determined according to experimentations. As shown in 602, each attribute is assigned an initial probability, wherein the initial probabilities are used by the Kalman filter in a standard way, wherein *VarForDeltaAndP*(*delta,p*) represents the variance that satisfies *Pr*[|*X* - *mean*| *< delta*] = p for X distributed as a normal distribution N(mean,Var).

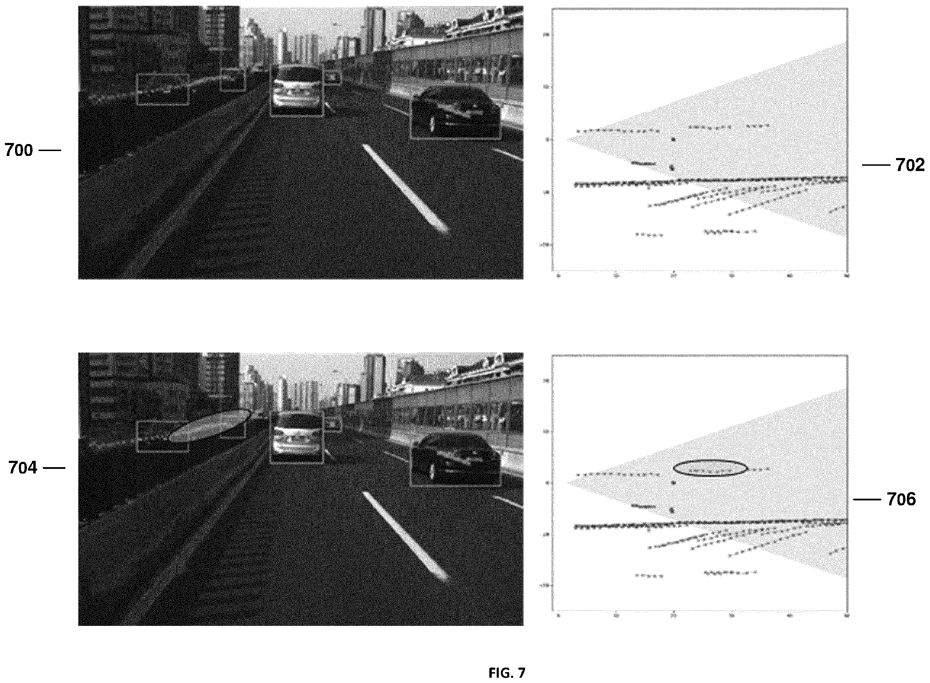

Reference is now made to FIG. 7, which depicts camera and RADAR/LIDAR trajectories, each in a respective domain of an identical scene, according to some embodiments of the present invention. As shown in 700, a camera frame is displayed, which demonstrates automobiles in front of a vehicle. As seen in 700, each automobile is surrounded by a bounding box, and camera trajectories of moving automobiles are mapped onto the frame as sequences of dots, representing automobile detections across multiple time frames. As shown in 702, trajectories originating from RADAR data are displayed, wherein a cone represents boundaries of the RADAR sensor in front of the vehicle. The RADAR trajectories correspond to the same time interval as the camera trajectories in 700. An application of the latent state model is demonstrated in 704 and 706, wherein two trajectories marked by ellipsoids, each in a respective domain, are matched as originating from an identical automobile.

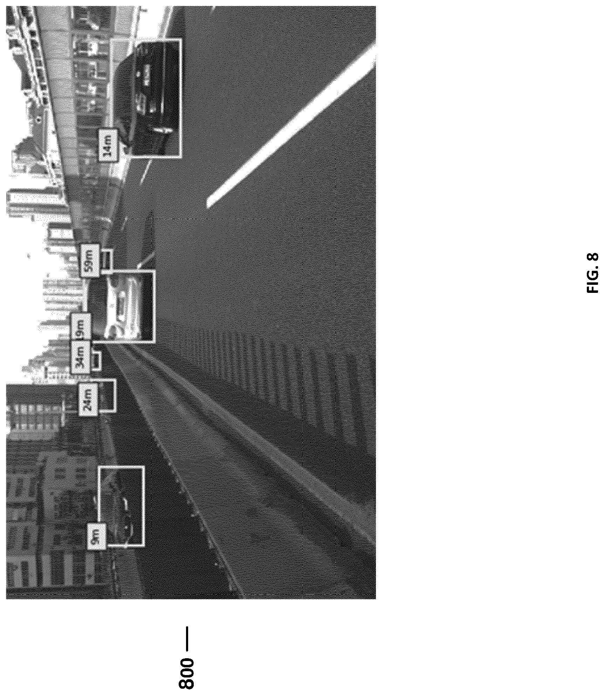

Reference is now made to FIG. 8, which depicts an exemplary application of an embodiment of the present invention. As shown in 800, a camera frame displays for each automobile a respective bounding box and estimated distance, which results from fusing camera and RADAR data, by matching respective trajectories. For example, the camera display may be of a HUD designated for a driver, in order to alert the driver to any potential dangers such as sudden changes in directions of the surrounding automobiles.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the appended claims.

The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant systems, methods and computer programs will be developed and the scope of the term sensor fusion intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements. In addition, citation or identification of any reference in this application shall not be construed as an admission that such reference is available as prior art to the present invention. To the extent that section headings are used, they should not be construed as necessarily limiting.

## Claims

1. A system for computing correspondence between multiple sensor observations of a scene, comprising:
an interface (104) for receiving first spatiotemporal datasets and second spatiotemporal datasets of a plurality of moving objects in a scene, the first spatiotemporal datasets and second spatiotemporal datasets are based on signals reflected from the plurality of moving objects and originate from a first sensor and a second sensor respectively, where the first sensor and the second sensor capture different types of signal; wherein the first spatiotemporal datasets originate from a camera sensor; wherein the second spatiotemporal datasets originate from a radio detection and ranging, RADAR, or light detection and ranging, LIDAR, sensor; and
processing circuitry (108), configured to:
generating a plurality of first spatiotemporal object trajectories and a plurality of second spatiotemporal object trajectories based on the first spatiotemporal datasets and the second spatiotemporal datasets respectively;
computing a distance metric between the first and second spatiotemporal object trajectories, by a respective mapping from a respective domain into a predetermined domain; wherein the predetermined domain is a domain comprising a coordinate system according to the first spatiotemporal trajectories originating from the camera sensor, or a domain comprising a coordinate system according to the second spatiotemporal trajectories originating from the RADAR or LIDAR sensor;
executing a matching computation between the mappings of the plurality of first and second spatiotemporal object trajectories by employing the distance metric in order to calculate a similarity between each pair of mappings of first and second spatiotemporal object trajectories, wherein the matching computation pairs trajectories for which a sum of distances between pairs is minimized across all possible trajectory matching combinations; and
outputting an outcome of the matching computation.

2. The system of claim 1, further comprising assigning a velocity to each moving object associated to a first spatiotemporal trajectory by estimating differences between the respective moving object locations within the respective first spatiotemporal trajectory.

3. The system of claim 2, wherein a height of each moving object corresponding to a trajectory of the second spatiotemporal datasets is estimated by a predetermined constant.

4. The system of claim 1, wherein bounding box representations for each moving object represented in the first spatiotemporal datasets is used by the respective mapping in order to estimate a velocity for the respective moving object by calculating respective differences between centroids of respective bounding boxes.

5. A system for computing correspondence between multiple sensor observations of a scene, comprising:
an interface (104) for receiving first spatiotemporal datasets and second spatiotemporal datasets of a plurality of moving objects in a scene, the first spatiotemporal datasets and second spatiotemporal datasets are based on signals reflected from the plurality of moving objects and originate from a first sensor and a second sensor respectively, where the first sensor and the second sensor capture different types of signal; wherein the first spatiotemporal datasets originate from a camera sensor; wherein the second spatiotemporal datasets originate from a radio detection and ranging, RADAR, or light detection and ranging, LIDAR, sensor; and
processing circuitry (108), configured to:
generating a plurality of first spatiotemporal object trajectories and a plurality of second spatiotemporal object trajectories based on the first spatiotemporal datasets and the second spatiotemporal datasets respectively;
computing a distance metric between the first and second spatiotemporal object trajectories, by a respective mapping from a respective domain into a predetermined domain; wherein the predetermined domain comprises a latent temporal domain and the respective mapping maps each possible combination of pairs of first and second spatiotemporal moving object trajectories into a respective latent state of a plurality of latent states, wherein the latent state is estimated employing a nonlinear double model Kalman filter with smoothing;
wherein each latent state contains attributes (*x, y, z, V*(*x*)*, V* (*y*)*, A*(*x*)*, A* (*y*)*, h, w*) comprising respectively: Distance from ego-vehicle in the axis of ego-vehicle motion, location on axis orthogonal to motion, a velocity *X* component, a velocity *Y* component, an acceleration *X* component, an acceleration *Y* component, an object height in a plane facing the ego-vehicle, and an object width in a plane facing the ego-vehicle, wherein X and Y denote the horizontal axis and the vertical axis respectively;
executing a matching computation between the mappings of the plurality of first and second spatiotemporal object trajectories;
wherein the matching computation comprises:
computing, for each estimated latent state:
a respective projection into a first and second domain corresponding to the first and second spatiotemporal datasets respectively;
a probability, based on the respective projection, for which a respective pair of first and second spatiotemporal moving object trajectories originate from an identical moving object; and
matching between the plurality of first and second spatiotemporal moving object trajectories by:
calculating a sum which maximizes the computed probabilities of all estimated latent states,
matching between first and second spatiotemporal moving object trajectories corresponding to respective latent states in the calculated sum;
and
outputting an outcome of the matching computation.

6. A method for computing correspondence between multiple sensor observations of a scene, comprising:
receiving first spatiotemporal datasets and second spatiotemporal datasets of a plurality of moving objects in a scene, the first spatiotemporal datasets and second spatiotemporal datasets are based on signals reflected from the plurality of moving objects and originate from a first sensor and a second sensor respectively, where the first sensor and the second sensor capture different types of signal; wherein the first spatiotemporal datasets originate from a camera sensor; wherein the second spatiotemporal datasets originate from a radio detection and ranging, RADAR, or light detection and ranging, LIDAR, sensor;
generating a plurality of first spatiotemporal object trajectories and a plurality of second spatiotemporal object trajectories based on the first spatiotemporal datasets and the second spatiotemporal datasets respectively;
computing a distance metric between the first and second spatiotemporal object trajectories, by a respective mapping from a respective domain into a predetermined domain; wherein the predetermined domain is a domain comprising a coordinate system according to the first spatiotemporal trajectories originating from the camera sensor, or a domain comprising a coordinate system according to the second spatiotemporal trajectories originating from the RADAR or LIDAR sensor;
executing a matching computation between the mappings of the plurality of first and second spatiotemporal object trajectories by employing the distance metric in order to calculate a similarity between each pair of mappings of first and second spatiotemporal object trajectories, wherein the matching computation pairs trajectories for which a sum of distances between pairs is minimized across all possible trajectory matching combinations; and
outputting an outcome of the matching computation.

7. A method for computing correspondence between multiple sensor observations of a scene, comprising:
receiving first spatiotemporal datasets and second spatiotemporal datasets of a plurality of moving objects in a scene, the first spatiotemporal datasets and second spatiotemporal datasets are based on signals reflected from the plurality of moving objects and originate from a first sensor and a second sensor respectively, where the first sensor and the second sensor capture different types of signal; wherein the first spatiotemporal datasets originate from a camera sensor; wherein the second spatiotemporal datasets originate from a radio detection and ranging, RADAR, or light detection and ranging, LIDAR, sensor; and
generating a plurality of first spatiotemporal object trajectories and a plurality of second spatiotemporal object trajectories based on the first spatiotemporal datasets and the second spatiotemporal datasets respectively;
computing a distance metric between the first and second spatiotemporal object trajectories, by a respective mapping from a respective domain into a predetermined domain; wherein the predetermined domain comprises the latent temporal domain and the respective mapping maps each possible combination of pairs of first and second spatiotemporal moving object trajectories into a respective latent state of a plurality of latent states, wherein the latent state is estimated employing a nonlinear double model Kalman filter with smoothing;
wherein each latent state contains attributes (*x, y, z, V* (*x*)*, V* (*y*)*, A*(*x*)*, A* (*y*)*, h, w*) comprising respectively: Distance from ego-vehicle in the axis of ego-vehicle motion, location on axis orthogonal to motion, a velocity *X* component, a velocity *Y* component, an acceleration *X* component, an acceleration *Y* component, an object height in a plane facing the ego-vehicle, and an object width in a plane facing the ego-vehicle, wherein X and Y denote the horizontal axis and the vertical axis respectively;
executing a matching computation between the mappings of the plurality of first and second spatiotemporal object trajectories;
wherein the matching computation comprises:
computing, for each estimated latent state:
a respective projection into a first and second domain corresponding to the first and second spatiotemporal datasets respectively;
a probability, based on the respective projection, for which a respective pair of first and second spatiotemporal moving object trajectories originate from an identical moving object; and
matching between the plurality of first and second spatiotemporal moving object trajectories by:
calculating a sum which maximizes the computed probabilities of all estimated latent states,
matching between first and second spatiotemporal moving object trajectories corresponding to respective latent states in the calculated sum;
and
outputting an outcome of the matching computation.

8. A computer-readable recording medium on which a program is recorded, wherein the program, when executed, enables the computer to implement:
generating a plurality of first spatiotemporal object trajectories and a plurality of second spatiotemporal object trajectories based on the first spatiotemporal datasets and the second spatiotemporal datasets of a plurality of moving objects in a scene respectively; wherein the first spatiotemporal datasets and second spatiotemporal datasets are based on signals reflected from the plurality of moving objects and originate from a first sensor and a second sensor respectively; wherein the first spatiotemporal datasets originate from a camera sensor; wherein the second spatiotemporal datasets originate from a radio detection and ranging, RADAR, or light detection and ranging, LIDAR, sensor;
computing a distance metric between the first and second spatiotemporal object trajectories, by a respective mapping from a respective domain into a predetermined domain; wherein the predetermined domain is a domain comprising a coordinate system according to the first spatiotemporal trajectories originating from the camera sensor, or a domain comprising a coordinate system according to the second spatiotemporal trajectories originating from the RADAR or LIDAR sensor;
executing a matching computation between the mappings of the plurality of first and second spatiotemporal object trajectories by employing the distance metric in order to calculate a similarity between each pair of mappings of first and second spatiotemporal object trajectories, wherein the matching computation pairs trajectories for which a sum of distances between pairs is minimized across all possible trajectory matching combinations; and
outputting an outcome of the matching computation.

9. A computer-readable recording medium on which a program is recorded, wherein the program, when executed, enables the computer to implement:
generating a plurality of first spatiotemporal object trajectories and a plurality of second spatiotemporal object trajectories based on the first spatiotemporal datasets and the second spatiotemporal datasets of a plurality of moving objects in a scene respectively; wherein the first spatiotemporal datasets and second spatiotemporal datasets are based on signals reflected from the plurality of moving objects and originate from a first sensor and a second sensor respectively; wherein the first spatiotemporal datasets originate from a camera sensor; wherein the second spatiotemporal datasets originate from a radio detection and ranging, RADAR, or light detection and ranging, LIDAR, sensor;
computing a distance metric between the first and second spatiotemporal object trajectories, by a respective mapping from a respective domain into a predetermined domain; wherein the predetermined domain comprises the latent temporal domain and the respective mapping maps each possible combination of pairs of first and second spatiotemporal moving object trajectories into a respective latent state of a plurality of latent states, wherein the latent state is estimated employing a nonlinear double model Kalman filter with smoothing;
wherein each latent state contains attributes (*x, y, z, V*(*x*)*, V*(*y*)*, A*(*x*)*, A* (*y*)*, h, w*) comprising respectively: Distance from ego-vehicle in the axis of ego-vehicle motion, location on axis orthogonal to motion, a velocity *X* component, a velocity *Y* component, an acceleration *X* component, an acceleration *Y* component, an object height in a plane facing the ego-vehicle, and an object width in a plane facing the ego-vehicle, wherein X and Y denote the horizontal axis and the vertical axis respectively;
executing a matching computation between the mappings of the plurality of first and second spatiotemporal object trajectories;
wherein the matching computation comprises:
computing, for each estimated latent state:
a respective projection into a first and second domain corresponding to the first and second spatiotemporal datasets respectively;
a probability, based on the respective projection, for which a respective pair of first and second spatiotemporal moving object trajectories originate from an identical moving object; and
matching between the plurality of first and second spatiotemporal moving object trajectories by:
calculating a sum which maximizes the computed probabilities of all estimated latent states,
matching between first and second spatiotemporal moving object trajectories corresponding to respective latent states in the calculated sum;
and
outputting an outcome of the matching computation.

## Patentansprüche

1. System zum Berechnen einer Übereinstimmung zwischen mehreren Sensorbeobachtungen einer Szene, umfassend:
eine Schnittstelle (104) zum Empfangen erster räumlich-zeitlicher Datensätze und zweiter räumlich-zeitlicher Datensätze einer Vielzahl von bewegten Objekten in einer Szene, wobei die ersten räumlich-zeitlichen Datensätze und die zweiten räumlich-zeitlichen Datensätze auf Signalen basieren, die von der Vielzahl von bewegten Objekten reflektiert werden und von einem ersten Sensor bzw. einem zweiten Sensor stammen, wobei der erste Sensor und der zweite Sensor unterschiedliche Arten von Signalen erfassen; wobei die ersten räumlich-zeitlichen Datensätze von einem Kamerasensor stammen; wobei die zweiten räumlich-zeitlichen Datensätze von einem funkgestützten Ortungs- und Abstandsmessungssensor, RADAR-Sensor, oder einem lichtgestützten Ortungs- und Abstandsmessungssensor, LIDAR-Sensor, stammen; und
Verarbeitungsschaltung (108), die zu Folgendem konfiguriert sind:
Erzeugen einer Vielzahl von ersten räumlich-zeitlichen Objekttrajektorien und einer Vielzahl von zweiten räumlich-zeitlichen Objekttrajektorien basierend auf den ersten räumlich-zeitlichen Datensätzen bzw. den zweiten räumlich-zeitlichen Datensätzen;
Berechnen einer Distanzmetrik zwischen der ersten und der zweiten räumlich-zeitlichen Objekttrajektorie durch eine jeweilige Zuordnung von einer jeweiligen Domäne in eine vorgegebene Domäne; wobei die vorgegebene Domäne eine Domäne ist, die ein Koordinatensystem gemäß den ersten räumlich-zeitlichen Trajektorien, die vom Kamerasensor stammen, umfasst, oder eine Domäne ist, die ein Koordinatensystem gemäß den zweiten räumlich-zeitlichen Trajektorien, die vom RADAR- oder LIDAR-Sensor stammen, umfasst;
Ausführen einer Vergleichsberechnung zwischen den Zuordnungen der Vielzahl von ersten und zweiten räumlich-zeitlichen Objekttrajektorien durch Verwenden der Distanzmetrik, um eine Ähnlichkeit zwischen jedem Paar von Zuordnungen erster und zweiter räumlich-zeitlicher Objekttrajektorien zu berechnen, wobei die Vergleichsberechnung Trajektorien paarweise zusammenfasst, für die eine Summe der Distanzen zwischen Paaren über alle möglichen Vergleichskombinationen der Trajektorien hinweg minimiert ist; und
Ausgeben eines Ergebnisses der Vergleichsberechnung.

2. System nach Anspruch 1, ferner umfassend Zuweisen einer Geschwindigkeit zu jedem bewegten Objekt, das einer ersten räumlich-zeitlichen Trajektorie zugeordnet ist, durch Schätzen von Unterschieden zwischen den jeweiligen Positionen der bewegten Objekte innerhalb der jeweiligen ersten räumlich-zeitlichen Trajektorie.

3. System nach Anspruch 2, wobei eine Höhe jedes bewegten Objekts, das einer Trajektorie der zweiten räumlich-zeitlichen Datensätze entspricht, durch eine vorgegebene Konstante geschätzt wird.

4. System nach Anspruch 1, wobei Begrenzungsrahmendarstellungen für jedes bewegte Objekt, das in den ersten räumlich-zeitlichen Datensätzen dargestellt wird, durch die jeweilige Zuordnung verwendet wird, um eine Geschwindigkeit für das jeweilige bewegte Objekt durch Berechnen jeweiliger Unterschiede zwischen Schwerpunkten jeweiliger Begrenzungsrahmen zu schätzen.

5. System zum Berechnen einer Übereinstimmung zwischen mehreren Sensorbeobachtungen einer Szene, umfassend:
eine Schnittstelle (104) zum Empfangen erster räumlich-zeitlicher Datensätze und zweiter räumlich-zeitlicher Datensätze einer Vielzahl von bewegten Objekten in einer Szene, wobei die ersten räumlich-zeitlichen Datensätze und die zweiten räumlich-zeitlichen Datensätze auf Signalen basieren, die von der Vielzahl von bewegten Objekten reflektiert werden und von einem ersten Sensor bzw. einem zweiten Sensor stammen, wobei der erste Sensor und der zweite Sensor unterschiedliche Arten von Signalen erfassen; wobei die ersten räumlich-zeitlichen Datensätze von einem Kamerasensor stammen; wobei die zweiten räumlich-zeitlichen Datensätze von einem funkgestützten Ortungs- und Abstandsmessungssensor, RADAR-Sensor, oder einem lichtgestützten Ortungs- und Abstandsmessungssensor, LIDAR-Sensor, stammen; und
Verarbeitungsschaltung (108), die zu Folgendem konfiguriert sind:
Erzeugen einer Vielzahl von ersten räumlich-zeitlichen Objekttrajektorien und einer Vielzahl von zweiten räumlich-zeitlichen Objekttrajektorien basierend auf den ersten räumlich-zeitlichen Datensätzen bzw. den zweiten räumlich-zeitlichen Datensätzen;
Berechnen einer Distanzmetrik zwischen der ersten und der zweiten räumlich-zeitlichen Objekttrajektorie durch eine jeweilige Zuordnung von einer jeweiligen Domäne in eine vorgegebene Domäne; wobei die vorgegebene Domäne eine latente Zeitdomäne umfasst und die jeweilige Zuordnung jede mögliche Kombination von Paaren erster und zweiter räumlich-zeitlicher Trajektorien bewegter Objekte einem jeweiligen latenten Zustand einer Vielzahl von latenten Zuständen zuordnet, wobei der latente Zustand unter Verwendung eines nichtlinearen Doppelmodell-Kalman-Filters mit Glättung geschätzt wird;
wobei jeder latente Zustand Attribute **(*x,y,z, V(x), V(y), A(x), Ay), h, w*)** enthält, die jeweils Folgendes umfassen: Distanz von dem Ego-Fahrzeug in der Achse der Bewegung des Ego-Fahrzeugs, Position auf der zu einer Bewegung orthogonalen Achse, eine Geschwindigkeitskomponente *X*, eine Geschwindigkeitskomponente *Y* , eine Beschleunigungskomponente *X* , eine Beschleunigungskomponente *Y*, eine Objekthöhe in einer dem Ego-Fahrzeug zugewandten Ebene und eine Objektbreite in einer dem Ego-Fahrzeug zugewandten Ebene, wobei X und Y die horizontale bzw. die vertikale Achse kennzeichnen;
Ausführen einer Vergleichsberechnung zwischen den Zuordnungen der Vielzahl von ersten und zweiten räumlich-zeitlichen Objekttrajektorien;
wobei die Vergleichsberechnung Folgendes umfasst:
Berechnen, für jeden geschätzten latenten Zustand:
einer jeweiligen Projektion in eine erste und zweite Domäne, die dem ersten bzw. dem zweiten räumlich-zeitlichen Datensatz entspricht;
einer Wahrscheinlichkeit, basierend auf der jeweiligen Projektion, für die ein jeweiliges Paar erster und zweiter räumlich-zeitlicher Trajektorien bewegter Objekte von einem identischen bewegten Objekt stammt; und
Vergleichen zwischen der Vielzahl von ersten und zweiten räumlich-zeitlichen Trajektorien bewegter Objekte durch:
Berechnen einer Summe, welche die berechneten Wahrscheinlichkeiten aller geschätzten latenten Zustände maximiert,
Vergleichen zwischen ersten und zweiten räumlich-zeitlichen Trajektorien bewegter Objekte, die den jeweiligen latenten Zuständen in der berechneten Summe entsprechen;
und
Ausgeben eines Ergebnisses der Vergleichsberechnung.

6. Verfahren zum Berechnen einer Übereinstimmung zwischen mehreren Sensorbeobachtungen einer Szene, umfassend:
Empfangen erster räumlich-zeitlicher Datensätze und zweiter räumlich-zeitlicher Datensätze einer Vielzahl von bewegten Objekten in einer Szene, wobei die ersten räumlich-zeitlichen Datensätze und die zweiten räumlich-zeitlichen Datensätze auf Signalen basieren, die von der Vielzahl von bewegten Objekten reflektiert werden und von einem ersten Sensor bzw. einem zweiten Sensor stammen, wobei der erste Sensor und der zweite Sensor unterschiedliche Arten von Signalen erfassen; wobei die ersten räumlich-zeitlichen Datensätze von einem Kamerasensor stammen; wobei die zweiten räumlich-zeitlichen Datensätze von einem funkgestützten Ortungs- und Abstandsmessungssensor, RADAR-Sensor, oder einem lichtgestützten Ortungs- und Abstandsmessungssensor, LIDAR-Sensor, stammen;
Erzeugen einer Vielzahl von ersten räumlich-zeitlichen Objekttrajektorien und einer Vielzahl von zweiten räumlich-zeitlichen Objekttrajektorien basierend auf den ersten räumlich-zeitlichen Datensätzen bzw. den zweiten räumlich-zeitlichen Datensätzen;
Berechnen einer Distanzmetrik zwischen der ersten und der zweiten räumlich-zeitlichen Objekttrajektorie durch eine jeweilige Zuordnung von einer jeweiligen Domäne in eine vorgegebene Domäne; wobei die vorgegebene Domäne eine Domäne ist, die ein Koordinatensystem gemäß den ersten räumlich-zeitlichen Trajektorien, die vom Kamerasensor stammen, umfasst, oder eine Domäne ist, die ein Koordinatensystem gemäß den zweiten räumlich-zeitlichen Trajektorien, die vom RADAR- oder LIDAR-Sensor stammen, umfasst;
Ausführen einer Vergleichsberechnung zwischen den Zuordnungen der Vielzahl von ersten und zweiten räumlich-zeitlichen Objekttrajektorien durch Verwenden der Distanzmetrik, um eine Ähnlichkeit zwischen jedem Paar von Zuordnungen erster und zweiter räumlich-zeitlicher Objekttrajektorien zu berechnen, wobei die Vergleichsberechnung Trajektorien paarweise zusammenfasst, für die eine Summe der Distanzen zwischen Paaren über alle möglichen Vergleichskombinationen der Trajektorien hinweg minimiert ist; und
Ausgeben eines Ergebnisses der Vergleichsberechnung.

7. Verfahren zum Berechnen einer Übereinstimmung zwischen mehreren Sensorbeobachtungen einer Szene, umfassend:
Empfangen erster räumlich-zeitlicher Datensätze und zweiter räumlich-zeitlicher Datensätze einer Vielzahl von bewegten Objekten in einer Szene, wobei die ersten räumlich-zeitlichen Datensätze und die zweiten räumlich-zeitlichen Datensätze auf Signalen basieren, die von der Vielzahl von bewegten Objekten reflektiert werden und von einem ersten Sensor bzw. einem zweiten Sensor stammen, wobei der erste Sensor und der zweite Sensor unterschiedliche Arten von Signalen erfassen; wobei die ersten räumlich-zeitlichen Datensätze von einem Kamerasensor stammen; wobei die zweiten räumlich-zeitlichen Datensätze von einem funkgestützten Ortungs- und Abstandsmessungssensor, RADAR-Sensor, oder einem lichtgestützten Ortungs- und Abstandsmessungssensor, LIDAR-Sensor, stammen; and
Erzeugen einer Vielzahl von ersten räumlich-zeitlichen Objekttrajektorien und einer Vielzahl von zweiten räumlich-zeitlichen Objekttrajektorien basierend auf den ersten räumlich-zeitlichen Datensätzen bzw. den zweiten räumlich-zeitlichen Datensätzen;
Berechnen einer Distanzmetrik zwischen der ersten und der zweiten räumlich-zeitlichen Objekttrajektorie durch eine jeweilige Zuordnung von einer jeweiligen Domäne in eine vorgegebene Domäne; wobei die vorgegebene Domäne die latente Zeitdomäne umfasst und die jeweilige Zuordnung jede mögliche Kombination von Paaren der ersten und zweiten räumlich-zeitlichen Trajektorien bewegter Objekte einem jeweiligen latenten Zustand einer Vielzahl von latenten Zuständen zuordnet, wobei der latente Zustand unter Verwendung eines nichtlinearen Doppelmodell-Kalman-Filters mit Glättung geschätzt wird;
wobei jeder latente Zustand Attribute **(*x,y,z, V(x), V(y), A(x), Ay), h, w*)** enthält, die jeweils Folgendes umfassen: Distanz von dem Ego-Fahrzeug in der Achse der Bewegung des Ego-Fahrzeugs, Position auf der zu einer Bewegung orthogonalen Achse, eine Geschwindigkeitskomponente *X,* eine Geschwindigkeitskomponente *Y* , eine Beschleunigungskomponente *X* , eine Beschleunigungskomponente *Y,* eine Objekthöhe in einer dem Ego-Fahrzeug zugewandten Ebene und eine Objektbreite in einer dem Ego-Fahrzeug zugewandten Ebene, wobei X und Y die horizontale bzw. die vertikale Achse kennzeichnen;
Ausführen einer Vergleichsberechnung zwischen den Zuordnungen der Vielzahl von ersten und zweiten räumlich-zeitlichen Objekttrajektorien;
wobei die Vergleichsberechnung Folgendes umfasst:
Berechnen, für jeden geschätzten latenten Zustand:
einer jeweiligen Projektion in eine erste und zweite Domäne, die dem ersten bzw. dem zweiten räumlich-zeitlichen Datensatz entspricht;
einer Wahrscheinlichkeit, basierend auf der jeweiligen Projektion, für die ein jeweiliges Paar erster und zweiter räumlich-zeitlicher Trajektorien bewegter Objekte von einem identischen bewegten Objekt stammt; und
Vergleichen zwischen der Vielzahl von ersten und zweiten räumlich-zeitlichen Trajektorien bewegter Objekte durch:
Berechnen einer Summe, welche die berechneten Wahrscheinlichkeiten aller geschätzten latenten Zustände maximiert,
Vergleichen zwischen ersten und zweiten räumlich-zeitlichen Trajektorien bewegter Objekte, die den jeweiligen latenten Zuständen in der berechneten Summe entsprechen;
und
Ausgeben eines Ergebnisses der Vergleichsberechnung.

8. Computerlesbares Aufzeichnungsmedium, auf dem ein Programm aufgezeichnet ist, wobei das Programm, wenn es ausgeführt wird, den Computer dazu befähigt, Folgendes zu implementieren:
Erzeugen einer Vielzahl von ersten räumlich-zeitlichen Objekttrajektorien und einer Vielzahl von zweiten räumlich-zeitlichen Objekttrajektorien basierend auf den ersten räumlich-zeitlichen Datensätzen bzw. den zweiten räumlich-zeitlichen Datensätzen einer Vielzahl von bewegten Objekten in einer Szene;
wobei die ersten räumlich-zeitlichen Datensätze und die zweiten räumlich-zeitlichen Datensätze auf Signalen basieren, die von der Vielzahl von bewegten Objekten reflektiert werden und von einem ersten Sensor bzw. einem zweiten Sensor stammen; wobei die ersten räumlich-zeitlichen Datensätze von einem Kamerasensor stammen; wobei die zweiten räumlich-zeitlichen Datensätze von einem funkgestützten Ortungs- und Abstandsmessungssensor, RADAR-Sensor, oder einem lichtgestützten Ortungs- und Abstandsmessungssensor, LIDAR-Sensor, stammen;
Berechnen einer Distanzmetrik zwischen der ersten und der zweiten räumlich-zeitlichen Objekttrajektorie durch eine jeweilige Zuordnung von einer jeweiligen Domäne in eine vorgegebene Domäne; wobei die vorgegebene Domäne eine Domäne ist, die ein Koordinatensystem gemäß den ersten räumlich-zeitlichen Trajektorien, die vom Kamerasensor stammen, umfasst, oder eine Domäne ist, die ein Koordinatensystem gemäß den zweiten räumlich-zeitlichen Trajektorien, die vom RADAR- oder LIDAR-Sensor stammen, umfasst;
Ausführen einer Vergleichsberechnung zwischen den Zuordnungen der Vielzahl von ersten und zweiten räumlich-zeitlichen Objekttrajektorien durch Verwenden der Distanzmetrik, um eine Ähnlichkeit zwischen jedem Paar von Zuordnungen erster und zweiter räumlich-zeitlicher Objekttrajektorien zu berechnen, wobei die Vergleichsberechnung Trajektorien paarweise zusammenfasst, für die eine Summe der Distanzen zwischen Paaren über alle möglichen Vergleichskombinationen der Trajektorien hinweg minimiert ist; und
Ausgeben eines Ergebnisses der Vergleichsberechnung.

9. Computerlesbares Aufzeichnungsmedium, auf dem ein Programm aufgezeichnet ist, wobei das Programm, wenn es ausgeführt wird, den Computer dazu befähigt, Folgendes zu implementieren:
Erzeugen einer Vielzahl von ersten räumlich-zeitlichen Objekttrajektorien und einer Vielzahl von zweiten räumlich-zeitlichen Objekttrajektorien basierend auf den ersten räumlich-zeitlichen Datensätzen bzw. den zweiten räumlich-zeitlichen Datensätzen einer Vielzahl von bewegten Objekten in einer Szene;
wobei die ersten räumlich-zeitlichen Datensätze und die zweiten räumlich-zeitlichen Datensätze auf Signalen basieren, die von der Vielzahl von bewegten Objekten reflektiert werden und von einem ersten Sensor bzw. einem zweiten Sensor stammen; wobei die ersten räumlich-zeitlichen Datensätze von einem Kamerasensor stammen; wobei die zweiten räumlich-zeitlichen Datensätze von einem funkgestützten Ortungs- und Abstandsmessungssensor, RADAR-Sensor, oder einem lichtgestützten Ortungs- und Abstandsmessungssensor, LIDAR-Sensor, stammen;
Berechnen einer Distanzmetrik zwischen der ersten und der zweiten räumlich-zeitlichen Objekttrajektorie durch eine jeweilige Zuordnung von einer jeweiligen Domäne in eine vorgegebene Domäne; wobei die vorgegebene Domäne die latente Zeitdomäne umfasst und die jeweilige Zuordnung jede mögliche Kombination von Paaren der ersten und zweiten räumlich-zeitlichen Trajektorien bewegter Objekte einem jeweiligen latenten Zustand einer Vielzahl von latenten Zuständen zuordnet, wobei der latente Zustand unter Verwendung eines nichtlinearen Doppelmodell-Kalman-Filters mit Glättung geschätzt wird;
wobei jeder latente Zustand Attribute (*x,y,z, V(x), V(y), A(x), Ay), h, w*) enthält, die jeweils Folgendes umfassen: Distanz von dem Ego-Fahrzeug in der Achse der Bewegung des Ego-Fahrzeugs, Position auf der zu einer Bewegung orthogonalen Achse, eine Geschwindigkeitskomponente *X*, eine Geschwindigkeitskomponente *Y* , eine Beschleunigungskomponente *X* , eine Beschleunigungskomponente *Y*, eine Objekthöhe in einer dem Ego-Fahrzeug zugewandten Ebene und eine Objektbreite in einer dem Ego-Fahrzeug zugewandten Ebene, wobei X und Y die horizontale bzw. die vertikale Achse kennzeichnen;
Ausführen einer Vergleichsberechnung zwischen den Zuordnungen der Vielzahl von ersten und zweiten räumlich-zeitlichen Objekttrajektorien;
wobei die Vergleichsberechnung Folgendes umfasst:
Berechnen, für jeden geschätzten latenten Zustand:
einer jeweiligen Projektion in eine erste und zweite Domäne, die dem ersten bzw. dem zweiten räumlich-zeitlichen Datensatz entspricht;
einer Wahrscheinlichkeit, basierend auf der jeweiligen Projektion, für die ein jeweiliges Paar erster und zweiter räumlich-zeitlicher Trajektorien bewegter Objekte von einem identischen bewegten Objekt stammt; und Vergleichen zwischen der Vielzahl von ersten und zweiten räumlich-zeitlichen Trajektorien bewegter Objekte durch:
Berechnen einer Summe, welche die berechneten Wahrscheinlichkeiten aller geschätzten latenten Zustände maximiert,
Vergleichen zwischen ersten und zweiten räumlich-zeitlichen Trajektorien bewegter Objekte, die den jeweiligen latenten Zuständen in der berechneten Summe entsprechen;
und
Ausgeben eines Ergebnisses der Vergleichsberechnung.

## Revendications

1. Système de calcul de correspondance entre de multiples observations de capteurs d'une scène, comprenant :
une interface (104) pour recevoir des premiers ensembles de données spatiotemporelles et des seconds ensembles de données spatiotemporelles d'une pluralité d'objets en mouvement dans une scène, les premiers ensembles de données spatiotemporelles et les seconds ensembles de données spatiotemporelles sont basés sur des signaux réfléchis par la pluralité d'objets en mouvement et proviennent respectivement d'un premier capteur et d'un second capteur, où le premier capteur et le second capteur capturent différents types de signaux ; dans lequel les premiers ensembles de données spatiotemporelles proviennent d'un capteur de caméra ; dans lequel les seconds ensembles de données spatiotemporelles proviennent d'un capteur de détection et de télémétrie radio, RADAR, ou de détection et de télémétrie par la lumière, LIDAR ; et
un circuit de traitement (108), configuré pour :
générer une pluralité de premières trajectoires d'objet spatiotemporelles et une pluralité de secondes trajectoires d'objet spatiotemporelles sur la base des premiers ensembles de données spatiotemporelles et des seconds ensembles de données spatiotemporelles respectivement ;
calculer une métrique de distance entre les premières et secondes trajectoires d'objet spatiotemporelles, par un mappage respectif d'un domaine respectif dans un domaine prédéterminé ;
dans lequel le domaine prédéterminé est un domaine comprenant un système de coordonnées selon les premières trajectoires spatiotemporelles provenant du capteur de caméra, ou un domaine comprenant un système de coordonnées selon les secondes trajectoires spatiotemporelles provenant du capteur RADAR ou LIDAR ;
exécuter un calcul de concordance entre les mappages de la pluralité de premières et secondes trajectoires d'objet spatiotemporelles en utilisant la métrique de distance afin de calculer une similarité entre chaque paire de mappages de premières et secondes trajectoires d'objet spatiotemporelles, dans lequel le calcul de concordance associe des trajectoires pour lesquelles une somme de distances entre les paires est minimisée sur toutes les combinaisons de concordance de trajectoires possibles ; et
générer un résultat du calcul de concordance.

2. Système selon la revendication 1, comprenant également l'attribution d'une vitesse à chaque objet en mouvement associé à une première trajectoire spatiotemporelle en estimant des différences entre les emplacements respectifs des objets en mouvement dans la première trajectoire spatiotemporelle respective.

3. Système selon la revendication 2, dans lequel une hauteur de chaque objet en mouvement correspondant à une trajectoire des seconds ensembles de données spatiotemporelles est estimée par une constante prédéterminée.

4. Système selon la revendication 1, dans lequel des représentations de boîtes englobantes pour chaque objet en mouvement représenté dans les premiers ensembles de données spatiotemporelles sont utilisées par le mappage respectif afin d'estimer une vitesse pour l'objet en mouvement respectif en calculant des différences respectives entre les centroïdes des boîtes englobantes respectives.

5. Système de calcul de correspondance entre de multiples observations de capteurs d'une scène, comprenant :
une interface (104) pour recevoir des premiers ensembles de données spatiotemporelles et des seconds ensembles de données spatiotemporelles d'une pluralité d'objets en mouvement dans une scène, les premiers ensembles de données spatiotemporelles et les seconds ensembles de données spatiotemporelles sont basés sur des signaux réfléchis par la pluralité d'objets en mouvement et proviennent respectivement d'un premier capteur et d'un second capteur, où le premier capteur et le second capteur capturent différents types de signaux ; dans lequel les premiers ensembles de données spatiotemporelles proviennent d'un capteur de caméra ; dans lequel les seconds ensembles de données spatiotemporelles proviennent d'un capteur de détection et de télémétrie radio, RADAR, ou de détection et de télémétrie par la lumière, LIDAR ; et
un circuit de traitement (108), configuré pour :
générer une pluralité de premières trajectoires d'objet spatiotemporelles et une pluralité de secondes trajectoires d'objet spatiotemporelles sur la base des premiers ensembles de données spatiotemporelles et des seconds ensembles de données spatiotemporelles respectivement ;
calculer une métrique de distance entre les premières et secondes trajectoires d'objet spatiotemporelles, par un mappage respectif d'un domaine respectif dans un domaine prédéterminé ;
dans lequel le domaine prédéterminé comprend un domaine temporel latent et le mappage respectif mappe chaque combinaison possible de paires de premières et secondes trajectoires d'objet en mouvement spatiotemporelles dans un état latent respectif d'une pluralité d'états latents, dans lequel l'état latent est estimé en utilisant un filtre de Kalman à double modèle non linéaire avec lissage ;
dans lequel chaque état latent contient des attributs (*x, y, z, V*(*x*)*, V* (*y*)*, A*(*x*)*, A*(*y*)*, h, w*) comprenant respectivement : la distance par rapport au véhicule ego dans l'axe de mouvement du véhicule ego, l'emplacement sur l'axe orthogonal au mouvement, une composante de vitesse *X,* une composante de vitesse *Y,* une composante d'accélération *X,* une composante d'accélération *Y,* une hauteur d'objet dans un plan faisant face au véhicule ego, et une largeur d'objet dans un plan faisant face au véhicule ego, dans lequel X et Y désignent respectivement l'axe horizontal et l'axe vertical ;
exécuter un calcul de concordance entre les mappages de la pluralité de premières et secondes trajectoires d'objet spatiotemporelles ;
dans lequel le calcul de concordance comprend :
le calcul, pour chaque état latent estimé :
d'une projection respective dans un premier et un second domaine correspondant respectivement aux premiers et seconds ensembles de données spatiotemporelles ;
d'une probabilité, sur la base de la projection respective, pour laquelle une paire respective de premières et secondes trajectoires d'objet en mouvement spatiotemporelles provient d'un objet en mouvement identique ; et
d'une concordance entre la pluralité de premières et secondes trajectoires d'objet en mouvement spatiotemporelles par :
le calcul d'une somme qui maximise les probabilités calculées de tous les états latents estimés,
la concordance entre les premières et secondes trajectoires d'objet en mouvement spatiotemporelles correspondant à des états latents respectifs dans la somme calculée ;
et
la génération d'un résultat du calcul de concordance.

6. Procédé de calcul de correspondance entre de multiples observations de capteurs d'une scène, comprenant :
la réception de premiers ensembles de données spatiotemporelles et de seconds ensembles de données spatiotemporelles d'une pluralité d'objets en mouvement dans une scène, les premiers ensembles de données spatiotemporelles et les seconds ensembles de données spatiotemporelles sont basés sur des signaux réfléchis par la pluralité d'objets en mouvement et proviennent respectivement d'un premier capteur et d'un second capteur, où le premier capteur et le second capteur capturent différents types de signaux ; dans lequel les premiers ensembles de données spatiotemporelles proviennent d'un capteur de caméra ; dans lequel les seconds ensembles de données spatiotemporelles proviennent d'un capteur de détection et de télémétrie radio, RADAR, ou de détection et de télémétrie par la lumière, LIDAR ;
la génération d'une pluralité de premières trajectoires d'objet spatiotemporelles et d'une pluralité de secondes trajectoires d'objet spatiotemporelles sur la base des premiers ensembles de données spatiotemporelles et des seconds ensembles de données spatiotemporelles respectivement ;
le calcul d'une métrique de distance entre les premières et secondes trajectoires d'objet spatiotemporelles, par un mappage respectif d'un domaine respectif dans un domaine prédéterminé ;
dans lequel le domaine prédéterminé est un domaine comprenant un système de coordonnées selon les premières trajectoires spatiotemporelles provenant du capteur de caméra, ou un domaine comprenant un système de coordonnées selon les secondes trajectoires spatiotemporelles provenant du capteur RADAR ou LIDAR ;
l'exécution d'un calcul de concordance entre les mappages de la pluralité de premières et secondes trajectoires d'objet spatiotemporelles en utilisant la métrique de distance afin de calculer une similarité entre chaque paire de mappages de premières et secondes trajectoires d'objet spatiotemporelles, dans lequel le calcul de concordance associe des trajectoires pour lesquelles une somme de distances entre les paires est minimisée sur toutes les combinaisons de concordance de trajectoires possibles ; et
la génération d'un résultat du calcul de concordance.

7. Procédé de calcul de correspondance entre de multiples observations de capteurs d'une scène, comprenant :
la réception de premiers ensembles de données spatiotemporelles et de seconds ensembles de données spatiotemporelles d'une pluralité d'objets en mouvement dans une scène, les premiers ensembles de données spatiotemporelles et les seconds ensembles de données spatiotemporelles sont basés sur des signaux réfléchis par la pluralité d'objets en mouvement et proviennent respectivement d'un premier capteur et d'un second capteur, où le premier capteur et le second capteur capturent différents types de signaux ; dans lequel les premiers ensembles de données spatiotemporelles proviennent d'un capteur de caméra ; dans lequel les seconds ensembles de données spatiotemporelles proviennent d'un capteur de détection et de télémétrie radio, RADAR, ou de détection et de télémétrie par la lumière, LIDAR ; et
la génération d'une pluralité de premières trajectoires d'objet spatiotemporelles et d'une pluralité de secondes trajectoires d'objet spatiotemporelles sur la base des premiers ensembles de données spatiotemporelles et des seconds ensembles de données spatiotemporelles respectivement ;
le calcul d'une métrique de distance entre les premières et secondes trajectoires d'objet spatiotemporelles, par un mappage respectif d'un domaine respectif dans un domaine prédéterminé ;
dans lequel le domaine prédéterminé comprend le domaine temporel latent et le mappage respectif mappe chaque combinaison possible de paires de premières et secondes trajectoires d'objet en mouvement spatiotemporelles dans un état latent respectif d'une pluralité d'états latents, dans lequel l'état latent est estimé en utilisant un filtre de Kalman à double modèle non linéaire avec lissage ;
dans lequel chaque état latent contient des attributs (*x, y, z, V*(*x*)*, V* (*y*)*, A*(*x*)*, A*(*y*)*, h, w*) comprenant respectivement : la distance par rapport au véhicule ego dans l'axe de mouvement du véhicule ego, l'emplacement sur l'axe orthogonal au mouvement, une composante de vitesse *X,* une composante de vitesse *Y,* une composante d'accélération *X,* une composante d'accélération *Y,* une hauteur d'objet dans un plan faisant face au véhicule ego, et une largeur d'objet dans un plan faisant face au véhicule ego, dans lequel X et Y désignent respectivement l'axe horizontal et l'axe vertical ;
l'exécution d'un calcul de concordance entre les mappages de la pluralité de premières et secondes trajectoires d'objet spatiotemporelles ;
dans lequel le calcul de concordance comprend :
le calcul, pour chaque état latent estimé :
d'une projection respective dans un premier et un second domaine correspondant respectivement aux premiers et seconds ensembles de données spatiotemporelles ;
d'une probabilité, sur la base de la projection respective, pour laquelle une paire respective de premières et secondes trajectoires d'objet en mouvement spatiotemporelles provient d'un objet en mouvement identique ; et
d'une concordance entre la pluralité de premières et secondes trajectoires d'objet en mouvement spatiotemporelles par :
le calcul d'une somme qui maximise les probabilités calculées de tous les états latents estimés,
la concordance entre les premières et secondes trajectoires d'objet en mouvement spatiotemporelles correspondant à des états latents respectifs dans la somme calculée ;
et
la génération d'un résultat du calcul de concordance.

8. Support d'enregistrement lisible par ordinateur sur lequel un programme est enregistré, dans lequel le programme, lorsqu'il est exécuté, active l'ordinateur pour mettre en œuvre :
la génération d'une pluralité de premières trajectoires d'objet spatiotemporelles et d'une pluralité de secondes trajectoires d'objet spatiotemporelles sur la base des premiers ensembles de données spatiotemporelles et des seconds ensembles de données spatiotemporelles d'une pluralité d'objets en mouvement dans une scène respectivement ; dans lequel les premiers ensembles de données spatiotemporelles et les seconds ensembles de données spatiotemporelles sont basés sur des signaux réfléchis par la pluralité d'objets en mouvement et proviennent respectivement d'un premier capteur et d'un second capteur ; dans lequel les premiers ensembles de données spatiotemporelles proviennent d'un capteur de caméra ; dans lequel les seconds ensembles de données spatiotemporelles proviennent d'un capteur de détection et de télémétrie radio, RADAR, ou de détection et de télémétrie par la lumière, LIDAR ;
le calcul d'une métrique de distance entre les premières et secondes trajectoires d'objet spatiotemporelles, par un mappage respectif d'un domaine respectif dans un domaine prédéterminé ;
dans lequel le domaine prédéterminé est un domaine comprenant un système de coordonnées selon les premières trajectoires spatiotemporelles provenant du capteur de caméra, ou un domaine comprenant un système de coordonnées selon les secondes trajectoires spatiotemporelles provenant du capteur RADAR ou LIDAR ;
l'exécution d'un calcul de concordance entre les mappages de la pluralité de premières et secondes trajectoires d'objet spatiotemporelles en utilisant la métrique de distance afin de calculer une similarité entre chaque paire de mappages de premières et secondes trajectoires d'objet spatiotemporelles, dans lequel le calcul de concordance associe des trajectoires pour lesquelles une somme de distances entre les paires est minimisée sur toutes les combinaisons de concordance de trajectoires possibles ; et
la génération d'un résultat du calcul de concordance.

9. Support d'enregistrement lisible par ordinateur sur lequel un programme est enregistré, dans lequel le programme, lorsqu'il est exécuté, active l'ordinateur pour mettre en œuvre :
la génération d'une pluralité de premières trajectoires d'objet spatiotemporelles et d'une pluralité de secondes trajectoires d'objet spatiotemporelles sur la base des premiers ensembles de données spatiotemporelles et des seconds ensembles de données spatiotemporelles d'une pluralité d'objets en mouvement dans une scène respectivement ; dans lequel les premiers ensembles de données spatiotemporelles et les seconds ensembles de données spatiotemporelles sont basés sur des signaux réfléchis par la pluralité d'objets en mouvement et proviennent respectivement d'un premier capteur et d'un second capteur ; dans lequel les premiers ensembles de données spatiotemporelles proviennent d'un capteur de caméra ; dans lequel les seconds ensembles de données spatiotemporelles proviennent d'un capteur de détection et de télémétrie radio, RADAR, ou de détection et de télémétrie par la lumière, LIDAR ;
le calcul d'une métrique de distance entre les premières et secondes trajectoires d'objet spatiotemporelles, par un mappage respectif d'un domaine respectif dans un domaine prédéterminé ;
dans lequel le domaine prédéterminé comprend le domaine temporel latent et le mappage respectif mappe chaque combinaison possible de paires de premières et secondes trajectoires d'objet en mouvement spatiotemporelles dans un état latent respectif d'une pluralité d'états latents, dans lequel l'état latent est estimé en utilisant un filtre de Kalman à double modèle non linéaire avec lissage ;
dans lequel chaque état latent contient des attributs (*x, y, z, V*(*x*)*, V* (*y*)*, A*(*x*)*, A*(*y*)*, h, w*) comprenant respectivement : la distance par rapport au véhicule ego dans l'axe de mouvement du véhicule ego, l'emplacement sur l'axe orthogonal au mouvement, une composante de vitesse *X,* une composante de vitesse *Y,* une composante d'accélération *X,* une composante d'accélération *Y,* une hauteur d'objet dans un plan faisant face au véhicule ego, et une largeur d'objet dans un plan faisant face au véhicule ego, dans lequel X et Y désignent respectivement l'axe horizontal et l'axe vertical ;
l'exécution d'un calcul de concordance entre les mappages de la pluralité de premières et secondes trajectoires d'objet spatiotemporelles ;
dans lequel le calcul de concordance comprend :
le calcul, pour chaque état latent estimé :
d'une projection respective dans un premier et un second domaine correspondant respectivement aux premiers et seconds ensembles de données spatiotemporelles ;
d'une probabilité, sur la base de la projection respective, pour laquelle une paire respective de premières et secondes trajectoires d'objet en mouvement spatiotemporelles provient d'un objet en mouvement identique ; et d'une concordance entre la pluralité de premières et secondes trajectoires d'objet en mouvement spatiotemporelles par :
le calcul d'une somme qui maximise les probabilités calculées de tous les états latents estimés,
la concordance entre les premières et secondes trajectoires d'objet en mouvement spatiotemporelles correspondant à des états latents respectifs dans la somme calculée ;
et
la génération d'un résultat du calcul de concordance.
